# EUROPEAN PATENT APPLICATION

(11) **EP 4 596 366 A1**
(43) Date of publication of application: **06.08.2025**
(21) Application number: 24305194.3
(22) Date of filing: 05.02.2024
(51) Int. Cl.: B61D 17/22, B61D 33/00, B60D 5/00

(54) **GANGWAY TUNNEL FOR INTERCONNECTING TWO SUCCESSIVE CARS OF AN ARTICULATED VEHICLE**

(71) Applicant: ALSTOM Holdings, 93400 Saint-Ouen-sur-Seine (FR)
(72) Inventor: VERGNAUD, Loïc, 75018 PARIS (FR); CNOCKAERT, David, 59710 PONT À MARCQ (FR); BILLAND, Emmanuel, 76190 HAUTOT SAINT SULPICE (FR); JAIGU, Camille, 75018 PARIS (FR)
(74) Representative: Plasseraud IP

(57) **Abstract**

A gangway tunnel (10) for interconnecting two successive cars (15A, 15B) of an articulated vehicle (15) along a longitudinal direction (X),the gangway tunnel (10) comprising a frame structure comprising at least two annular interface frames (20A, 20B, 20C) and one or more bellows (25), each below (25) extending between two interface frames (20A, 20B, 20C), the gangway tunnel (10) further comprising one or more passenger supports (40, 50), each passenger support (40, 50) defining at least one support area (40A, 40B, 40A', 40B') specifically configured for passenger ischial support and/or passenger dorsal support.

## Description

The present invention concerns a passenger support for a gangway tunnel interconnecting two successive cars of an articulated vehicle along a longitudinal direction.

The invention also concerns an articulated vehicle comprising a gangway tunnel interconnecting two successive cars of the vehicle, the gangway tunnel comprising at least one passenger support.

In articulated vehicles such as trains, metros, tramways or articulated buses, two successive cars can be interconnected via a gangway tunnel comprising a walkway and one or more bellows extending between adjacent ends of the two cars and surrounding the walkway to defined a sealed space between the two adjacent cars, through which passengers can walk from one of the two adjacent cars to the other.

Each bellow has a corrugated structure comprising annular corrugations, made of parallel valleys and crests interleaved along a longitudinal axis of the vehicle. This corrugated structure allows deformations of the below when the vehicle travels in a curved section of a railway or a road.

During the travel of the vehicle, two successive cars move one relative to the other and a gangway tunnel interconnecting the two cars is subject to many movements, the comfort of the gangway tunnel being thus limited.

Hence, an aim of the invention is to improve the habitability and comfort of a vehicle comprising at least two articulated cars interconnected by a gangway tunnel.To this aim, the invention concerns a gangway tunnel for interconnecting two successive cars of an articulated vehicle along a longitudinal direction, the gangway tunnel comprising a frame structure comprising at least two annular interface frames and one or more bellows, each below extending between two interface frames, the gangway tunnel further comprising one or more passenger supports, each passenger support defining at least one support area specifically configured for passenger ischial support and/or passenger dorsal support.

According to other advantageous aspects of the invention, the gangway tunnel comprises one or more of the following features, taken in isolation or in any technically possible combination:
- each support area of the passenger support is defined by a plurality of internal beads of a corrugated inner wall of one of the one or more bellows, the beads being convex and adjoining in the longitudinal direction;
- the passenger support comprises two different support areas defined by the internal beads at two different heights along an elevation direction;
- the gangway tunnel comprises two passenger supports areas spaced apart from each other along the longitudinal direction;
- each bellow is double-walled and comprises the inner wall having the internal beads and an outer wall having external beads;
- the passenger support comprises:
   a)a base coupled to one of the interface frame,
   b)a body defining the support area;
      - the base comprises a spacer for connecting the body to the base while maintaining a spacing along a spacing direction orthogonal to the longitudinal direction;- the support area is oblong, a main axis of the support area being parallel to the elevation direction;
      - the support area is planar; and
      - a width of the support area along the longitudinal direction is chosen according to a 95th percentile shoulder width of a passenger population.

The invention also relates to an articulated vehicle comprising a plurality of cars and at least one gangway tunnel according to any one of the preceding claims interconnecting two successive cars.

The invention will appear more clearly on reading the following description, given only as a non-limiting example, and made with reference to the drawings in which:
- figure 1 is 3D view of a first embodiment of a gangway tunnel comprising a passenger support according to the invention;
- figure 2 shows three exemplary profiles of the passenger support of figure 1;
- figure 3 is a 3D view of a second embodiment of a gangway tunnel comprising a passenger support according to the invention;
- figure 4 shows an exemplary cross section relative to the elevation direction of the passenger support of figure 3; and
- figure 5 shows a partial cross-section of a bellow of the gangway tunnel of figure 1 in an horizontal plane.

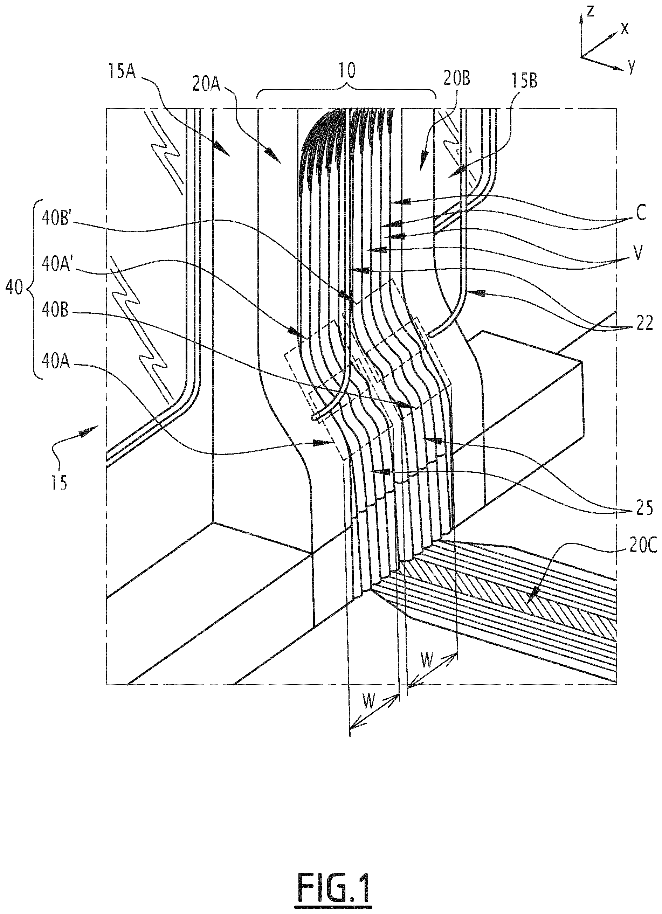

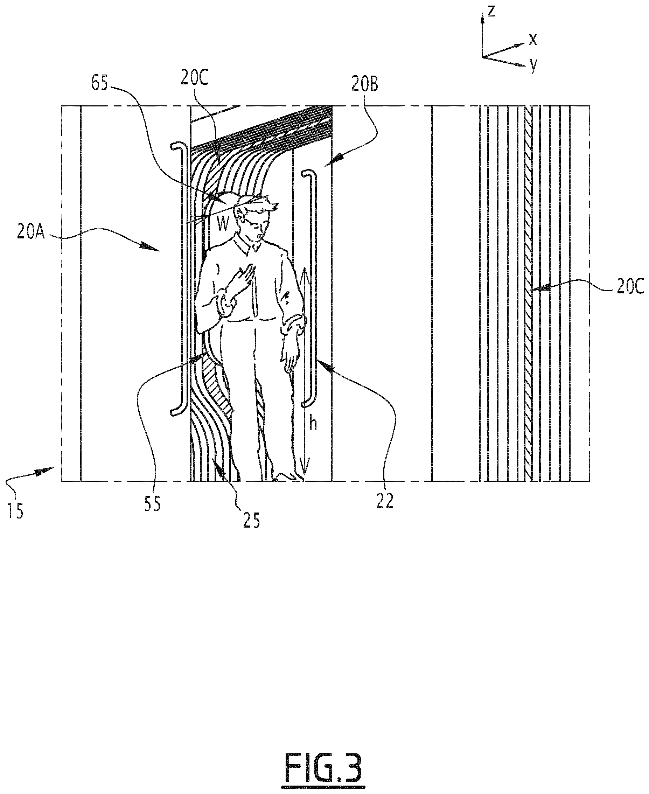

A first embodiment of the gangway tunnel 10 for interconnecting two successive cars 15A, 15B of an articulated vehicle 15 along a longitudinal direction X according to the invention is described in reference to figures 1 and 3.

The articulated vehicle 15 is for example a train, a metro, a tramway or an articulated bus.

The gangway tunnel 10 extends between adjacent facing ends of the two successive cars 15A, 15B. Hence, the gangway tunnel 10 defines a sealed gangway for a passenger between the two successive cars 15A, 15B along the longitudinal direction X.

A passenger standing in the gangway tunnel 10 is framed on by an internal surface of the gangway tunnel 10 to his left and to his right along a transverse direction Y orthogonal to the longitudinal direction X, as well as below and above him along an elevation direction Z orthogonal to the longitudinal and transverse directions X, Y.

The gangway tunnel 10 comprises a frame structure comprising at least two annular interface frames 20A, 20B, 20C and one or more bellows 25, each below extending between two interface frames.

Each interface frame 20A, 20B, 20C is configured for interfacing either two bellows 25 with one another or for interfacing a bellow 25 with a respective car 15A, 15B.

Each interface frame 20A, 20B, 20C has for example an annular cross-section in a plane perpendicular to the longitudinal direction X.

Within the meaning of the application, "annular" is not limited to a particular geometry provided the cross-section defines a closed contour. The contour can thus be for example substantially rectangular or oval or ellipsoidal or circular or have a more complex geometry.

Each interface frame 20A, 20B, 20C is either an extremal interface frame 20A, 20B, configured for interfacing a bellow 25 with a car 15A, 15B or an intermediate interface frame 20C configured for interfacing two bellows 25 with one another.

In the example of figure 1, the interface frames 20A, 20B, 20C comprises two extremal interface frames 20A, 20B configured for interfacing a bellow 25 with a respective car 15A, 15B and one intermediate interface frame 20C configured for interfacing two bellows 25 with one another.

Each interface frame 20A, 20B, 20C is for example at least partially metallic.

One or more of the interface frames 20A, 20B, 20C may define part of the internal surface of the gangway tunnel 10.

In particular, as illustrated on figure 1, each extremal interface frame 20A, 20B is for example configured for ensuring a visual and surface continuity with the end of the car 15A, 15B to which the extremal interface frame 20A, 20B is fixed.

Optionally, the gangway tunnel 10 comprises at least one passenger pole 22, each passenger pole 22 extending across one of the extremal interface frames 20A, 20B and being configured for one or more passengers in a standing position to grip the passenger pole 22.

Each bellow 25 is tubular and extends between two successive interface frames 20A, 20B, 20C to define a sealed space between said two successive interface frames 20A, 20B, 20C.

Each bellow 25 is configured to deform when the articulated vehicle 15 travels in a curved section of the railway or the road to accommodate for relative movements of the ends of the two successive cars 15A, 15B interconnected by the gangway tunnel 10.

To this end, each bellow 25 comprises for example a corrugated inner wall 25A provided with annular corrugations distributed along the longitudinal direction X.

The corrugations define inwardly protruding beads alternating with grooves along the longitudinal direction X.

The corrugations define a corrugated inner surface of the gangway tunnel 10. The inner surface exhibits parallel valleys V and crests C alternating along the longitudinal direction X, as shown on figure 1.

The crests C are formed by the beads and the valleys V are formed by the grooves of the corrugated skirt.

The corrugated inner wall 25A is at least partially made in a flexible material, i.e. a material allowing the deformations required by an intended use of the articulated vehicle 15, in particular when the articulated vehicle 15 moves along curved pathways.

The corrugated inner wall 25A is optionally provided one or more reinforcing frames 35. Each reinforcing frame 35 is configured for stiffening the corrugated inner wall 25A along the transverse direction Y and along the elevation direction Z.

Each reinforcing frame 35 is for example at least partially metallic.

Each reinforcing frame 35 is advantageously positioned on a respective crest C of the corrugated inner wall 25A.

The gangway tunnel 10 further comprises at least one passenger support 40

Each passenger support 40 defines at least one ischial support area 40A, 40B, 40A', 40B' specifically configured for passenger ischial support.

In the example of figure 1, the passenger support 40 defines four ischial support areas 40A, 40B, 40A', 40B'.

Each passenger support 40 is formed on the inner surface of a bellow 25 and defines part of the internal surface of the gangway tunnel 10.

Advantageously, as shown on figure 1, the corrugated internal surface of the bellow 25 has the valleys V which are exposed to a passenger P situated in the gangway, the crests C and if any, the reinforcing frames 35 not being visible by the passenger P.

Each ischial support area 40A, 40B, 40A', 40B' of the ischial passenger support 40 is defined by a plurality of internal beads of the corrugated skirt of a bellow 25, the beads being convex and adjoining in the longitudinal direction X.

Adjoining beads reduce the risk of pinching for a passenger P resting on an ischial support area 40A, 40B, 40A', 40B', while maintaining the deformation ability of the bellow 25.

The corrugated skirt provided with one or several ischial support areas 40A, 40B, 40A', 40B' may added to an existing bellow 25 as a supplemental internal wall, for example in a post-mounting step. This provision allows to modify an existing gangway tunnel.

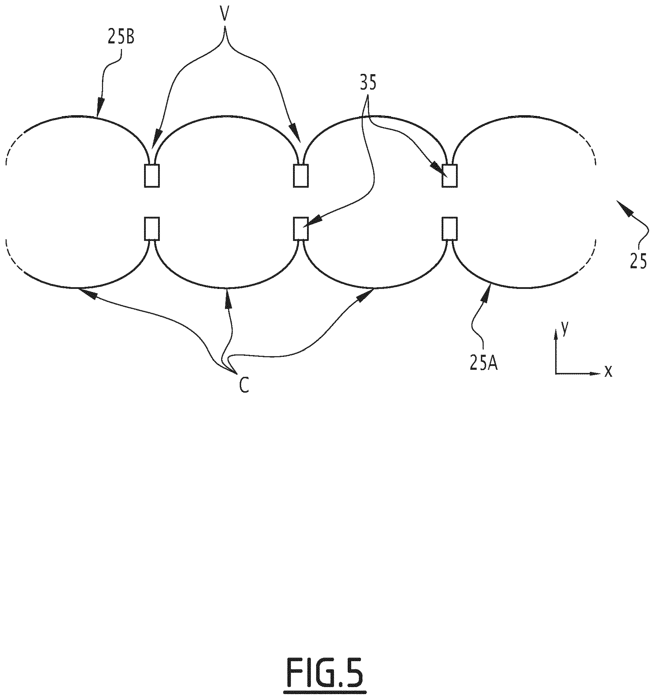

In this case, the bellow 25 is double-walled and comprises the corrugated inner wall 25A having the internal beads defining the passenger ischial support 45 and an outer wall 25B. The outer wall 25B surrounds the corrugated inner wall 25A and is for example corrugated, for example with external beads protruding outwardly and adjoining along the longitudinal direction as shown in figure 5.

The ischial passenger support 40 is defined by the internal surface of a bellow 25, the internal surface of this bellow 25 having a multiple waved profile MW in an elevation plane YZ orthogonal to the longitudinal direction X over a width w along the longitudinal direction X.

The multiple waved profile MW allows to define the at least one ischial support area 40A, 40B, 40A', 40B' specifically configured for passenger ischial support.

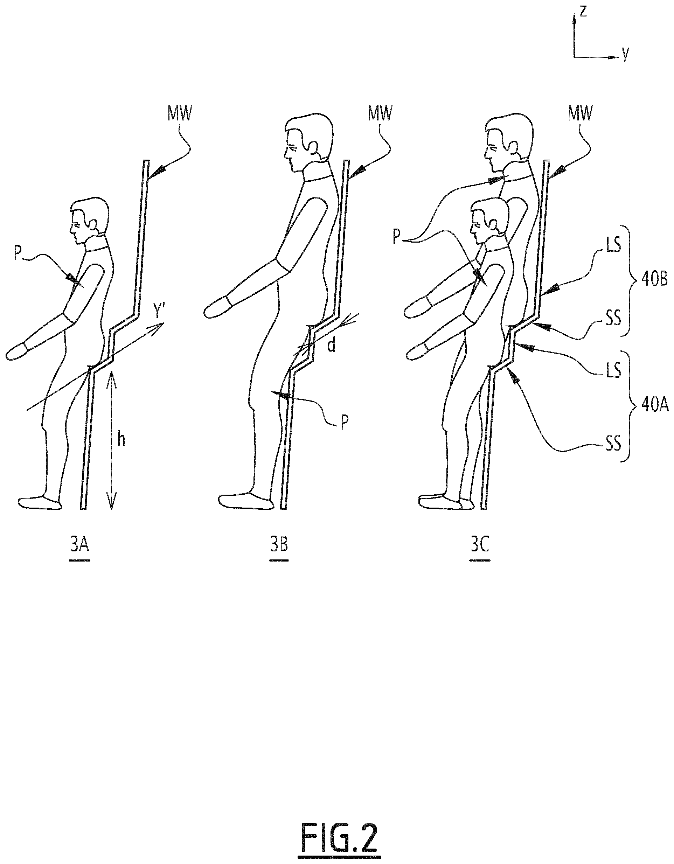

An exemplary multiple waved profile MW, corresponding to the embodiment of figure 1 can be observed on figure 2. In this example, the multiple waved profile MW is a two-waved profile defining two ischial support areas 40A, 40B or 40A', 40B'.

Each ischial support area 40A, 40B , 40A', 40B' comprises a sitting surface SS and a lumbar support LS.

The sitting surface SS extends along the longitudinal direction X and along a sitting direction Y', which can be substantially parallel or inclined relative to the transverse direction Y.

The sitting surface SS is specially configured for supporting the weight of a passenger P when the passenger's buttocks rest on the sitting surface SS.

One or more of a depth d of the sitting surface SS along the sitting direction Y' and/or the width w of the sitting surface along the longitudinal direction X, an inclination of the sitting direction Y' relative to the transverse direction Y, a height h of the sitting surface relative to a ground of the gangway passage 10 along the elevation direction Z can be chosen according to size parameters of a n^{th} percentile of a female and/or male population of passengers P. For example n is equal to 90 or 95.

This allows providing a passenger support 40 specially adapted for ischial support of a given population of passengers P, thus increasing the comfort of the gangway tunnel 10.

For example, the height h is comprised between 750mm and 770mm.

Figure 2 shows a first ischial support area 40A, 40A', specially configured for a female passenger P and a second ischial support area 40B, 40B', specially configured for a male passenger P.

In this example, the second ischial support area 40B, 40B' has a height h and a depth d greater than the ones of the first ischial support area 40A, 40A'.

Figure 1 shows that two identical first ischial support areas 40A and 40A' and two identical second ischial support areas 40B and 40B' are defined on two bellows 25 of the gangway tunnel 10.

In this case, the four ischial support areas 40A, 40B, 40A', 40B' have the same width w and the same inclination of the respective sitting direction Y', and each first support area 40A, 40A' is below a respective second support area 40B, 40B'.

Alternatively, at least two ischial support areas 40A, 40B, 40A', 40B' have different widths w.

Still alternatively, the sitting directions Y' of at least two ischial support areas 40A, 40B, 40A', 40B' may not be parallel.

Generally speaking, at least two ischial support areas 40A, 40B, 40A', 40B' can be spaced apart from one another along the longitudinal direction X and/or along the elevation direction Z.

Advantageously, each ischial support area 40A, 40B, 40A', 40B' is spaced apart from any of the interface frames 20A, 20B, 20C of the respective below 25 by more than a security distance. The security distance can be chosen according to size parameters of a n^{th} percentile of a female and/or male population of passengers P. This provision allows to reduce the risk of pinching of a passenger P resting on an ischial support area 40A, 40B, 40A', 40B' between the bellow 25 and the respective interface frame 20A, 20B, 20C.

In a particular embodiment, the passenger support 40 comprises one or more positioning marker.

A positioning marker is configured for helping the passenger P identifying the ischial passenger support area(s) 40A, 40B, 40A', 40B' and resting appropriately on it/them.

To this end, a positioning marker can comprise one or more colored marks positioned in the ischial support area(s) 40A, 40B, 40A', 40B' or on a contour of the passenger support area(s) 40A, 40B, 40A', 40B'.

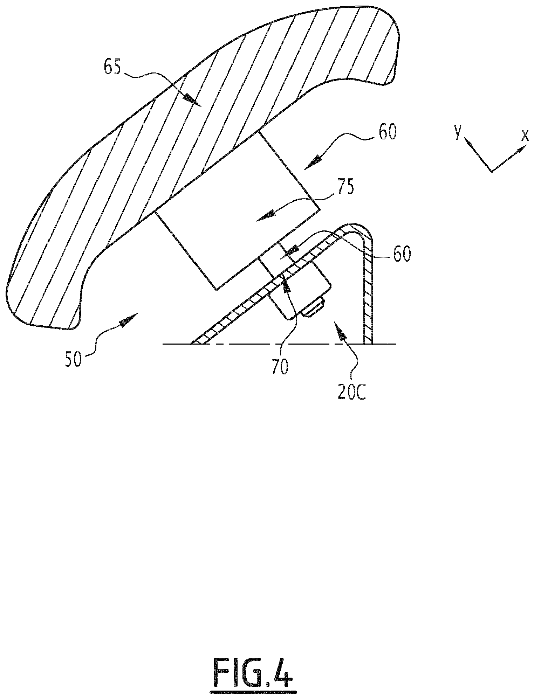

A second embodiment of the gangway tunnel 10 for interconnecting two successive cars 15A, 15B of an articulated vehicle 15 along a longitudinal direction X according to the invention is described in reference to figures 3 and 4.

The second embodiment differs from the first embodiment in that the passenger support 50 defines at least one dorsal support area 55 specifically configured for passenger dorsal support and in that the passenger support 50 is coupled to one of the interface frames 20A, 20B, 20C.

In this case, the passenger support 50 comprises a base 60 coupled to one of the interface frames 20A, 20B, 20C, and a body 65.

The body 65 extends above the base 60 along the transverse direction Y.

The body 65 extends along the longitudinal and elevation directions X, Z and thus defines the dorsal support area 55.

The dorsal support area 50 is specially configured for dorsal support of a passenger P, i.e. for providing support for one or more lumbar and/or thoracic vertebrae of the passenger P standing in the gangway tunnel 10.

One or more of the width w of the dorsal support area 50 along the longitudinal direction X, an inclination of the dorsal support area 55 relative to the elevation direction Z, the height h of the dorsal support area 55 relative to the ground of the gangway passage 10 along the elevation direction Z can be chosen according to size parameters of a n^{th} percentile of a female and/or male population of passengers P.

This provision allows to provide a passenger support 50 specially adapted for dorsal support of a given population of passengers P, thus increasing the comfort of the gangway tunnel 10.

Advantageously, the width w of the dorsal support area 55 is chosen so as to maintain the deformation ability of the bellows 25 and simultaneously provide optimal support for the passenger P.

In particular, the width w of the dorsal support area 55 can be chosen according to a 95th percentile shoulder width, while maintaining compatibility with the gangway dynamic movements.

Various shapes can be considered for the dorsal support area 55.

In a particular embodiment, the passenger support 50, and hence the dorsal support area 55, has an oblong shape, a main axis of the support area being parallel to the elevation direction Z, as shown in figure 3.

A cross-section profile of the dorsal support area 55 relative to the elevation direction Z can be adapted to the intended use of the articulated vehicle 15, in particular to the cases where this use is associated with S-shaped movements of the gangway tunnel 10.

Typically, the cross-section profile of the dorsal support area 55 has a curvature inferior than the ones of dorsal supports provided inside the successive cars 15A, 15B, so that the width w of the dorsal support area 55 can be sufficient while maintaining the deformation ability of the bellows 25.

For increasing the comfort of the passenger P, the dorsal support area 55 may comprise a soft or resilient cushioning foam.

The base 60 is coupled to one of the interface frames 20A, 20B, 20C. In the example of figure 4, the base 60 is coupled to the intermediate frame 20C.

Advantageously, the width w of the dorsal support area 55 is chosen so that the dorsal support area 55 is spaced apart by at least a security distance from any interface frame 20A, 20B, 20C neighboring the interface frame to which the passenger dorsal support 50 is coupled.

The base 60 may be coupled to one of the interface frame 20A, 20B, 20C in a removable manner with coupling means. This provision allows to modify an existing gangway tunnel to form a gangway tunnel 10 according to the invention for example in a post-mounting step.

The coupling means can be attached to a single interface frame 20A, 20B, 20C at a single anchor point 70, since the passenger dorsal support 50 is not submitted to significant torsional efforts. Indeed, a passenger who leans with his back on the dorsal support 50 transmits no torsional efforts when the articulated vehicle 15 moves, unlike a passenger gripping the potential passenger pole 22.

Advantageously, the base 60 comprises a spacer 75 configured for spacing the body 65 from the bellows 25.

This provision allows a larger and hence more comfortable support area 55 without hindering the deformation ability of the bellows 25.

The spacer 75 extends along a spacing direction orthogonal to the longitudinal direction X. The spacing direction can be parallel to the transverse direction Y, as shown in figure 4, or inclined relative to the transverse direction Y.

In a particular embodiment, the articulated vehicle 15 comprises one or more passenger dorsal supports 40 and one or more passenger ischial supports 50 distributed in one or more gangway tunnels 10.

## Claims

1. Gangway tunnel (10) for interconnecting two successive cars (15A, 15B) of an articulated vehicle (15) along a longitudinal direction (X),
the gangway tunnel (10) comprising a frame structure comprising at least two annular interface frames (20A, 20B, 20C) and one or more bellows (25), each below (25) extending between two interface frames (20A, 20B, 20C),
the gangway tunnel (10) further comprising one or more passenger supports (40, 50), each passenger support (40, 50) defining at least one support area (40A, 40B, 40A', 40B') specifically configured for passenger ischial support and/or passenger dorsal support.

2. Gangway tunnel (10) according to claim 1, wherein each support area (40A, 40B, 40A', 40B') of the passenger support (40) is defined by a plurality of internal beads (V) of a corrugated inner wall (25A) of one of the one or more bellows (25), the beads being convex and adjoining in the longitudinal direction (X).

3. Gangway tunnel (10) according to claim 2, wherein the passenger support (40) comprises two different support areas (40A, 40A'; 40B, 40B') defined by the internal beads at two different heights (h) along an elevation direction (Z).

4. Gangway tunnel (10) according to claim 3, comprising two passenger supports areas (40A, 40B; 40A', 40B') spaced apart from each other along the longitudinal direction (X).

5. Gangway tunnel (10) according to any of claims 2 to 4, wherein each bellow (25) is double-walled and comprises the inner wall (25A) having the internal beads and an outer wall (25B) having external beads.

6. Gangway tunnel (10) according to claim 1, wherein the passenger support (50) comprises:
- a base (60) coupled to one of the interface frame (20A, 20B, 20C),
- a body (65) defining the support area (55).

7. Gangway tunnel (10) according to claim 6, wherein the base (60) comprises a spacer for connecting the body (65) to the base (60) while maintaining a spacing along a spacing direction orthogonal to the longitudinal direction (X).

8. Gangway tunnel (10) according to claim 7, wherein the support area (55) is oblong, a main axis of the support area (55) being parallel to the elevation direction (Z).

9. Gangway tunnel (10) according to any of claims 7 to 8, wherein the support area (55) is planar.

10. Gangway tunnel (10) according to any of claims 7 to 9, wherein a width of the support area (55) along the longitudinal direction (X) is chosen according to a 95^{th} percentile shoulder width of a passenger population.

11. Articulated vehicle (15) comprising a plurality of cars (15A, 15B) and at least one gangway tunnel (10) according to any one of the preceding claims interconnecting two successive cars (15A, 15B).
